# EUROPÄISCHE PATENTANMELDUNG

(11) **EP 1 258 467 A2**
(43) Veröffentlichungstag der Anmeldung: **20.11.2002**
(21) Anmeldenummer: 02010024.4
(22) Anmeldetag: 04.05.2002
(51) Int. Cl.: C05F 1/00, C05B 17/00

(54) **Verfahren zur Herstellung von phosphathaltigem Düngemittel**

(30) Priorität: 17.05.2001 DE 10124073
(71) Anmelder: Saria Bio-Industries GmbH & Co. Verwaltungs- und Beteiligungs-KG, 59379 Selm (DE)
(72) Erfinder: Rethmann, Klemens, 59348 Lüdinghausen (DE)
(74) Vertreter: Schulte, Jörg (DE)

(57) **Zusammenfassung**

Zur Schonung der natürlichen Ressourcen wird ein Verfahren zur Herstellung von phosphorhaltigem Düngemittel vorgeschlagen, bei dem aus dem Tiermehl oder auch direkt aus den Schlachtabfällen durch Verbrennung eine stark phosphorhaltige Asche erzeugt wird, die wie weicherdiges Rohphosphat behandelt, abgepackt und als Ca-/P-Düngemittel eingesetzt wird.

## Beschreibung

Die Erfindung betrifft ein Verfahren zum Herstellen von phosphorhaltigem Düngemittel aus Rohstoffen.

Phosphate sind die Salze der Phosphorsäure, die für Pflanzen einen unentbehrlichen Nährstoff darstellen. Naturphosphate finden sich vielfach als Gemenge der Phosphatminerale Apatit und Phosphorit insbesondere in Algerien, in Tunis, Florida, Pennsylvannia, Nordbrasilien und Ozeanien. Diese Vorkommen sind endlich, sodass Phosphor weltweit als erstlimitierender Nährstoff gilt, obwohl er wie erwähnt in großen Mengen in der Landwirtschaft als Dünger und mineralisches Rohphosphat auch als Mineralfutter für Tiere benötigt wird. Wegen der hohen Bedeutung des Phosphors ist auch die künstliche Herstellung von Phosphaten bzw. von Phosphorsäure bekannt, wobei die dabei zur Verfügung gestellten Grundstoffe auch als Rostschutz-, Kräftigungs-und Weichmachungsmittel Verwendung finden. Grundsätzlich bekannt ist es, dass Phosphate überall in Gesteinen und im Boden in kleinen Mengen vorkommen. Auch Knochen, Hirn und Nerven enthalten Phosphate, wobei wegen der geringen Menge eine Gewinnung dieser Anteilphosphate sich nicht lohnt.

Der Erfindung liegt nun die Aufgabe zugrunde, ein hygienisch einwandfreies und den allgemeinen Vorschriften genügendes Verfahren zur Gewinnung von Phosphor bzw. phosphathaltigem Düngemittel zu schaffen, um die natürlichen Ressourcen zu schonen und zu strecken.

Die Aufgabe wird gemäß der Erfindung dadurch gelöst, dass Schlachtabfälle und sonstige zu entsorgende Tierkörper in einer Tierkörperbeseitigungsanstalt zu Tiermehl und Tierfett verarbeitet werden und dass das Tiermehl dann einer Monoverbrennung unterzogen und die entstehende Asche wie weicherdiges Rohphosphat behandelt, abgepackt und als Ca-/P-Düngemittel eingesetzt wird.

Diese Herstellung von Tiermehl und Tierfett aus entsprechenden Schlachtabfällen und sonstigen Tierresten ist grundsätzlich bekannt. Das Tiermehl wurde bisher an landwirtschaftliche Nutztiere verfüttert, was aufgrund der BSE-Krise heute nicht mehr zulässig ist. Das Tierfett wird für andere Zwecke eingesetzt, wobei man das Tiermehl heutzutage praktisch nur noch zusammen mit anderen Brennstoffen in Kraftwerken einsetzen kann. Das Tiermehl hat in getrockneter Form einen Brennwert, der vergleichbar mit Braunkohle ist. Eine Verbrennung mit anderen Brennstoffen in Kraftwerken bringt zwar entsprechende Brennwerte und lässt eine Ausnutzung über Heißdampf bzw. Strom zu, doch befinden sich dann in der verbleibenden Asche kontaminierte Bestandteile, die einen Einsatz als Düngemittel ausschließen. Mit Hilfe des erfindungsgemäßen Verfahrens allerdings, erhält man in der Monoverbrennung eine nicht durch andere Brennstoffe oder Brennstoffbestandteile kontaminierte Asche, die als Ca-/P-Düngelmittel eingesetzt werden kann. Die Qualität dieses Phosphates ist der eines weicherdigen Rohphosphates vergleichbar, wobei sich in dieser Asche rund 15 % Phosphor ansammelt, das dann als vorteilhafter Nährstoff für die Pflanzen zur Verfügung steht. Nach der Abkühlung der Asche wird diese mit dem hohen Anteil Phosphor entsprechend weiterbehandelt, abgepackt und dann wie schon erwähnt als Düngemittel in üblicher Form eingesetzt.

Nach einer zweckmäßigen Weiterbildung der Erfindung ist vorgesehen, dass die bei der Verbrennung des Tiermehls freiwerdende Abgaswärme zurückgewonnen wird. Durch die Rückgewinnung von Abgaswärme kann die Wirtschaftlichkeit des erfindungsgemäßen Verfahrens vorteilhaft unterstützt und auch dementsprechen sichergestellt werden, dass entsprechendes Material Einsatz in der Landwirtschaft findet.

Nach einer weiteren zweckmäßigen Ausbildung ist vorgesehen, dass das Tiermehl in einer zirkulierenden Wirbelschicht verbrannt wird. Das vom Prinzip her trokkene Tiermehl neigt insbesondere wegen dem Verhältnis geringen Temperaturen bei seiner Herstellung zu Anbackungen zum Fließen und ähnlichen Beeinträchtigungen des Verbrennungsvorganges, sodass man bisher bei der üblichen Verbrennung nur durch Zusatz von Brennstoffen geglaubt hat, eine sichere Verbrennung sicherstellen zu können. Gemäß der Erfindung ist aber vorgesehen, dass das Tiermehl in einer zirkulierenden Wirbelschicht verbrannt wird, also kontinuierlich in Bewegung gehalten wird, sodass die einzelnen Partikel sicher entgast bzw. verbrannt werden, ohne dass es zu den nachteiligen Anbackungen und sonstigen Schäden kommen kann. Erst mit der zirkulierenden Wirbelschicht ist sichergestellt, dass dieses besondere Material, d. h das Tiermehl auch in Monoverbrennung sicher verarbeitet werden kann. Untersuchungen haben gezeigt, dass im Tiermehl rund 4 % Phosphor enthalten sind, während durch die Verbrennung in der zirkulierenden Wirbelschicht der Anteil des Phosphors in der Asche auf ca. 15 % ansteigt.

Weiter vorn ist bereits erwähnt worden, dass die Wärme soweit möglich zurückgewonnen wird. Über diese zurückgewonnene Wärme ist es dann auch möglich, die Primärluft für die Wirbelschicht über einen Wärmeaustausch vorzuwärmen, um so den Verbrennungsvorgang gezielt zu unterstützen.

Vorteilhaft ist es dann dabei, in der zirkulierenden Wirbelschicht und zwar vorzugsweise im Rückführungszyklonzweig eine Wärmerückgewinnung in einem Wirbelschichtwärmeaustauscher vorzunehmen. Durch eine derartige Rückgewinnung wird die Wirtschaftlichkeit vorteilhaft erhöht, wobei bei dieser Anordnung und Verfahrensführung aus den der Wirbelschicht wieder zugeführten staubhaltigen oder aschehaltigen Bereichen die Wärme abgezogen wird, ohne dass dadurch der Prozess als solcher beeinträchtigt wird.

Der Aschegehalt von Tiermehl beträgt ca. 25 %. In dieser Asche sind verschiedene Anteile, die als solche der Verwendung in einem Düngemittel nicht entgegenstehen. Vor allem enthält die Asche rund 15 % Phosphor, sodass diese Gesamtasche als Ca-/P-Düngemittel verarbeitet und eingesetzt werden kann.

Soll der Phosphatgehalt erhöht werden, so ist dies dadurch möglich, dass die Asche mit dem Phosphat einer Klassierung unterzogen wird, wobei durch Erhöhung des Feinstkornanteils der Phosphatgehalt im Endprodukt erhöht wird. Das Phosphat bzw. der Phosphor sammelt sich im feineren Ascheprodukt, sodass sich die Klassierung der Gehalt entsprechend vorteilhaft gesteigert werden kann.

Eine andere Möglichkeit der Beeinflussung des Phosphatgehaltes ist die, die Asche mit dem hohen Phosphatgehalt den Phosphatanteil erhöhend aufzubereiten. Der weitaus größte Teil des in der Asche enthaltenen Phosphors kann gelöst werden, sodass dadurch eine Trennung von den festen Bestandteilen der Asche möglich ist.

Weiter vorn ist bereits darauf hingewiesen worden, dass es schwierig ist, Tierkörperrestteile ohne Anbackungen und sonstige Probleme zu verbrennen. Nachteilig ist hierbei insbesondere das Tierfett, das deshalb in der Tierkörperbeseitigungsanstalt vom Tiermehl getrennt gewonnen wird. Soll hierauf verzichtet werden, insbesondere weil eine anderweitige Verwertung des Tierfettes nicht möglich oder nicht mit dem entsprechenden Profit möglich ist, kann ein Verfahren zweckmäßig sein, das sich dadurch auszeichnet, dass bei der Tierkörperbeseitigung und -entsorgung aus Schlachtabfällen und sonstigen Tieren und Tierresten ein Fleischbrei hergestellt und dieser dann in einer zirkulierenden Wirbelschicht verbrannt und die dabei entstehende Asche wie weicherdiges Rohphosphat behandelt, abgepackt und als Ca-/P-Düngemittel eingesetzt wird. Voraussetzung ist, dass auch bei dieser Verbrennung das Tierfett weitgehenst verbrannt wird, wobei natürlicherweise das Tierfett indirekt als weiterer Brennstoff dient. Die zirkulierende Wirbelschicht sorgt dabei dafür, dass dieses breiige Material auch vollständig verbrennt.

Nach einer Weiterbildung diesen Verfahrens ist vorgesehen, dass der Fleischbei vor der Verbrennung in der zirkulierenden Wirbelschicht weitgehend vom freien Wasser getrennt wird, um auf diese Art und Weise den Verbrennungsprozess nicht durch Wasserdampf zusätzlich zu belasten. Diese Abtrennung des freien Wassers kann rein mechanisch erfolgen oder aber auch dadurch, dass durch eine Vorerwärmung des Fleischbreis das Wasser ausgetrieben wird.

Aufgrund der BSE-Krise ist die Verfütterung ist die Verfütterung von Tiermehl in der Bundesrepublik aber auch in anderen Ländern derzeit nicht möglich. Grund hierfür ist, dass bei der Herstellung von Tiermehl und Tierfett die eventuell enthaltenen Krankheitskeime nicht mit der notwendigen Sicherheit vernichtet werden. Gemäß der vorliegenden Erfindung ist aber vorgesehen, dass das Tiermehl und/oder auch das Tierfett bei hohen Temperaturen (mind. 850 °C) verbrannt wird, wobei Tiermehlasche mit hohem Phosphorgehalt entsteht. Gemäß der Erfindung ist vorgesehen, dass diese Tiermehlasche bzw. die Tierbreiasche nach oder auch ohne Aufbereitung als Mineralfutterkomponente verwendet wird. Dies ist deshalb möglich, weil aufgrund der hohen Temperaturen (mind. 850 °C) eventuelle Keime und sonstige Schadstoffe in der Tiermehlasche nicht mehr vorhanden sind.

Die Erfindung zeichnet sich dadurch aus, dass mit Hilfe des Verfahrens phosphathaltige Düngemittel erzeugt werden können, die die natürlichen Ressourcen schonen und die einen Einsatz in der Landwirtschaft und anderen Bereichen möglich macht, ohne dass die Gefahr einer Kontamination besteht. Die Schlachtabfälle und Tierkörperreste werden zunächst zu Tiermehl und Tierfett verarbeitet, wobei dann aus dem Tiermehl durch Verbrennung eine stark phosphorhaltige Asche erzeugt wird, die die Qualität eines üblichen weicherdigen Rohphosphates aufweist. Diese Asche kann dementsprechend als Ca-/P-Düngemittel eingesetzt werden, ohne Gefahren für die Umwelt und insbesondere ohne Gefahren für die Menschen und auch die Tiere. Letzteres sogar, wenn das Endprodukt als Mineralfutterkomponente dem Futter von Tieren gleich welcher Art zugemischt wird. Die dafür notwendige einwandfreie Verbrennung wird in der zirkulierenden Wirbelschichtanlage vorgenommen, ohne dass bei der Verbrennung selber noch bei dem Endprodukt irgendwelche Kontaminationen oder Probleme zu befürchten sind.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigt:

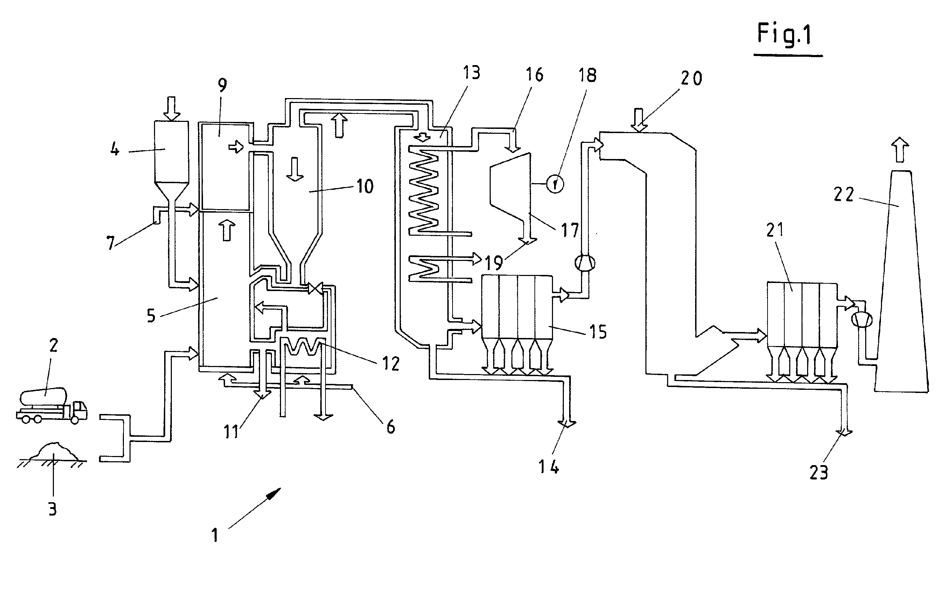

- Fig. 1: ein Schema einer Verbrennungsanlage von Tiermehl.

Fig. 1 zeigt das Schema einer Verbrennungsanlage 1, in der vor allem über die Festmehlanlieferung 3 Tiermehl in trockener Form angeliefert und dann dem Wirbelschichtkessel 5 zugeführt wird. Denkbar ist es aber auch, über die Flüssiganlieferung 2 Fleischbrei anzuliefern, der dann einer Vortrocknungsbehandlung unterzogen oder gleich dem Wirbelschichtkessel 5 zugeführt wird.

Mit 4 ist ein Kalksilo bezeichnet, über das der notwendige Kalk in die Wirbelschichtanlage hineingeführt wird. Mit 6 ist die Primärluftzufuhr und mit 7 die Sekundärluftzufuhr bezeichnet, wobei die Primärluft im Rahmen der Primärluftzufuhr 6 auch vor einer Vorwärmung zugeführt werden kann, um den Verbrennungsprozess entsprechend zu begünstigen.

Teile des Wirbelschichtkessels 5 ist die Brennkammer 9, wo durch die Sekundärluftzufuhr 7 entsprechend hohe Brennwerte erzielt werden und aus der Asche dem Rückführungszyklon 10 zugeführt wird. Während die Aschepartikel absinken und direkt oder indirekt dem Ascheaustrag 11 zugeführt werden, werden die Abgase in einen Abgasheizkessel 13 geführt, wo Dampf über die Dampfleitung 16 der Turbine 17 und damit der Stromabgabe 18 zugeführt wird. Mit 19 ist der Prozessdampfauslass bezeichnet, um anzudeuten, dass auch dieser Dampf noch für andere Zwecke eingesetzt werden kann.

Die Aschepartikel aus dem Rückführungszyklon 10 gelangen in den Wirbelschichtkessel 5 zurück oder zum Wirbelschichtwärmeaustauscher 12, um hier die Wärme aus der Asche herauszunehmen, bevor diese über den Ascheaustrag 11 der weiteren Verarbeitung zugeführt wird. Ein weiterer Ascheaustrag liegt hinter dem Staubfilter 15 bzw. dem Abgasheizkessel 13, wobei hier über den Feinascheaustrag 14 die feinkörnigen Komponenten ausgetragen werden.

Das Abgas wird dann weiter in Richtung Kamin 22 geführt, wobei es nach der Kalkmilchzugabe 20 zunächst weiter gereinigt wird. Außerdem muss das Abgas zunächst noch den Filterschichtadsorber 21 passieren, bevor die Abgase über den Kamin 22 in die Atmosphäre freigegeben werden. Mit 23 ist der Sprühadsorberrückstandsaustrag bezeichnet, wobei aufgrund des hohen Kalkgehaltes auch hier die Verwendung im Düngemittelbereich möglich ist.

Die wesentlichen Ascheausträge sind mit 11 und 14 bezeichnet, wobei die hier freigesetzte Asche den schon erwähnten hohen Phosphoranteil von über 15 % aufweist, sodass dieses Material der Düngemittelbearbeitung zugeführt werden kann.

Alle genannten Merkmale, auch die den Zeichnungen allein zu entnehmenden, werden allein und in Kombination als erfindungswesentlich angesehen.

## Patentansprüche

1. Verfahren zum Herstellen von phosphorhaltigem Düngemittel aus Rohstoffen,
**dadurch gekennzeichnet,**
**dass** Schlachtabfälle und sonstige zu entsorgende Tierkörper in einer Tierkörperbeseitigungsanstalt zu Tiermehl und Tierfett verarbeitet werden und dass das Tiermehl dann einer Monoverbrennung unterzogen und die entstehende Asche wie weicherdiges Rohphosphat behandelt, abgepackt und als Ca-/P-Düngemittel eingesetzt wird.

2. Verfahren nach Anspruch 1,
**dadurch gekennzeichnet,**
**dass** die bei der Verbrennung des Tiermehls freiwerdende Abgaswärme zurückgewonnen wird.

3. Verfahren nach einem der vorhergehenden Ansprüche,
**dadurch gekennzeichnet,**
**dass** das Tiermehl in einer zirkulierenden Wirbelschicht verbrannt wird.

4. Verfahren nach Anspruch 3,
**dadurch gekennzeichnet,**
**dass** die Primärluft für die Wirbelschicht über einen Wärmeaustausch vorgewärmt wird.

5. Verfahren nach einem der vorhergehenden Ansprüche,
**dadurch gekennzeichnet,**
**dass** in der zirkulierenden Wirbelschicht und zwar vorzugsweise im Rückführungszyklonzweig eine Wärmerückgewinnung in einem Wirbelschichtwärmeaustauscher vorgenommen wird.

6. Verfahren nach einem der vorhergehenden Ansprüche,
**dadurch gekennzeichnet,**
**dass** die Asche mit dem Phosphat gemeinsam als Düngemittel verarbeitet wird.

7. Verfahren nach einem der vorhergehenden Ansprüche,
**dadurch gekennzeichnet,**
**dass** die Asche mit dem Phosphat einer Klassierung unterzogen wird, wobei durch Erhöhung des Feinstkornanteils der Phosphatgehalt im Endprodukt erhöht wird.

8. Verfahren nach einem der vorhergehenden Ansprüche,
**dadurch gekennzeichnet,**
**dass** die Asche mit dem hohen Phosphatgehalt den Phosphatanteil erhöhend aufbereitet wird.

9. Verfahren zur Herstellung von phosphathaltigem Düngemittel aus Rohstoffen,
**dadurch gekennzeichnet,**
**dass** bei der Tierkörperbeseitigung und -entsorgung aus Schlachtabfällen und sonstigen Tieren und Tierresten ein Fleischbrei hergestellt und dieser dann in einer zirkulierenden Wirbelschicht verbrannt und die dabei entstehende Asche wie weicherdiges Rohphosphat behandelt, abgepackt und als Ca-/P-Düngemittel eingesetzt wird.

10. Verfahren nach Anspruch 9,
**dadurch gekennzeichnet,**
**dass** der Fleischbei vor der Verbrennung in der zirkulierenden Wirbelschicht weitgehend vom freien Wasser getrennt wird.

11. Verfahren nach Anspruch 1 oder Anspruch 9,
**dadurch gekennzeichnet,**
**dass** die Tiermehlasche bzw. die Tierbreiasche nach oder auch ohne Aufbereitung als Mineralfutterkomponente verwendet wird.
